# EUROPEAN PATENT APPLICATION

(11) **EP 4 692 806 A1**
(43) Date of publication of application: **11.02.2026**
(21) Application number: 23929018.2
(22) Date of filing: 11.12.2023
(51) Int. Cl.: G01N 35/04, B25J 15/08

(54) **GRIPPING MECHANISM, STORAGE DEVICE, AND GRIPPING METHOD**

(30) Priority: 27.03.2023 JP 2023050053
(71) Applicant: HITACHI HIGH-TECH CORPORATION, Tokyo 105-6409 (JP)
(72) Inventor: MURAMATSU Yoshiki, Tokyo 105-6409 (JP); YAMASHITA Taichiro, Tokyo 105-6409 (JP); OKUSA Takenori, Tokyo 105-6409 (JP)
(74) Representative: MERH-IP Matias Erny Reichl Hoffmann Patentanwälte PartG mbB
(86) International application number: PCT/JP2023/044268
(87) International publication number: WO 2024/202275

(57) **Abstract**

Provided are a gripping mechanism that can be reduced in size as compared in the related art, and that has improved reliability by detecting a state in which a stable gripping force is generated, a storage device, and a gripping method. The gripping mechanism includes: a first gripping arm 24a and a second gripping arm 24b disposed around a vertical axis and pivotally supported to be swingable along a horizontal support shaft and configured to grip an object at lower ends; a gripping spring 27 configured to apply a gripping force to the lower ends of the first gripping arm 24a and the second gripping arm 24b; a plurality of control arms 29a and 29b provided in pairs with the first gripping arm 24a and the second gripping arm 24b and configured to control an opening and closing operation of the first gripping arm 24a and the second gripping arm 24b; and an arm relative displacement detection plate 35a and an arm relative displacement detector 35b whose output signal changes when a distance between the first gripping arm 24a and the second gripping arm 24b and the control arms 29a and 29b is increased to a predetermined amount or more by gripping the object with a predetermined force by the first gripping arm 24a and the second gripping arm 24b.

## Description

### Technical Field

The present invention relates to a gripping mechanism, a storage device, and a gripping method.

### Background Art

PTL 1 discloses a sample container gripping device that grips a sample container containing a specimen, the device including a pair of clamps that wait outside a conveyance path for conveying a sample carrier until the sample carrier on which the sample container is placed is conveyed to a predetermined position, and horizontally move toward the conveyance path when the sample carrier is conveyed to the predetermined position to grip the sample container from a horizontal direction at the predetermined position.

### Citation List

### Patent Literature

PTL 1: JP2021-71381A

### Summary of Invention

### Technical Problem

An automatic analyzer, for example, a biochemical automatic analyzer, analyzes components of a biological sample such as serum or urine.

In such an automatic analyzer, generally, it is necessary to perform quality control using a standard sample and a quality control sample when necessary, such as when starting up every morning or when a reagent is newly charged, and these samples are transferred to a sample container for convenience improvement. The sample container is stored in a storage cabinet in an automatic analyzer, transferred from the storage cabinet to a conveyance container by a gripping mechanism at the time of analysis or quality control of a corresponding item, and discharged to an analysis unit. Therefore, the automatic analyzer is provided with a gripping mechanism capable of gripping the sample container and accessing the storage cabinet and the conveyance container in the automatic analyzer.

As an example of such a technique, there is a technique described in PTL 1 described above.

The gripping mechanism that grips the sample container grips, for example, a sample container containing a standard sample or a quality control sample by sandwiching the sample container with a plurality of arms. Under this state, it is desirable to grip the sample container with a stable gripping force in order to remove the sample container from the storage cabinet or the conveyance container and install the sample container in the storage cabinet or the conveyance container.

Further, there are many types of sample containers. Therefore, it is desirable to ensure stable gripping of sample containers having a plurality of diameters.

In the configuration described in PTL 1, the presence or absence of gripping can be confirmed only by observing a relationship between ON and OFF states of two sensors.

Here, depending on a device configuration, it is necessary to perform an up-down operation in a state of gripping a gripping target, but in such a case, further weight reduction and miniaturization are required, and thus a new separate configuration is required.

The invention has been made in view of the above problems, and an object of the invention is to provide a gripping mechanism, a storage device, and a gripping method that can be reduced in size as compared with the related art and have improved reliability by detecting a state in which a stable gripping force is generated.

### Solution to Problem

The invention includes a plurality of methods for solving the above problems, and an example thereof includes: a plurality of gripping arms disposed around a vertical axis, the gripping arms being pivotally supported to be swingable along a horizontal support shaft, the gripping arms being configured to grip an object at lower ends; a biasing member coupled to the plurality of gripping arms and configured to apply a gripping force to the lower ends of the plurality of gripping arms; a plurality of control arms provided in pairs with the plurality of gripping arms, the control arms being configured to control an opening and closing operation of the gripping arms; and a state sensor whose output signal changes when a distance between the gripping arms and the control arms is increased to a predetermined amount or more by gripping the object with a predetermined force by the gripping arms.

### Advantageous Effects of Invention

According to the invention, it is possible to achieve miniaturization as compared with the related art, and it is possible to increase reliability by detecting a state in which a stable gripping force is generated. Problems, configurations, and effects other than those described above will be clarified by the following description of embodiments.

### Brief Description of Drawings

[FIG. 1] FIG. 1 is a schematic plan view of an automatic analyzer including a container storage device including a gripping mechanism according to an embodiment.
[FIG. 2] FIG. 2 is a schematic side view of the container storage device including the gripping mechanism according to the embodiment.
[FIG. 3] FIG. 3 is a schematic view of the gripping mechanism according to the embodiment.
[FIG. 4] FIG. 4 is a configuration diagram of the gripping mechanism according to the embodiment.
[FIG. 5A] FIG. 5A is a schematic view of a state in which gripping arms of the gripping mechanism according to the embodiment are opened.
[FIG. 5B] FIG. 5B is a schematic view of a state in which gripping rubbers of the gripping mechanism according to the embodiment are in contact with a sample container.
[FIG. 5C] FIG. 5C is a schematic view showing a state in which an arm relative displacement detector of the gripping mechanism according to the embodiment detects an arm relative displacement detection plate.
[FIG. 6A] FIG. 6A is a diagram showing a diameter identification operation of the gripping mechanism according to the embodiment.
[FIG. 6B] FIG. 6B is a diagram showing the diameter identification operation of the gripping mechanism according to the embodiment.
[FIG. 6C] FIG. 6C is a diagram showing the diameter identification operation of the gripping mechanism according to the embodiment.
[FIG. 6D] FIG. 6D is a diagram showing the diameter identification operation of the gripping mechanism according to the embodiment.

### Description of Embodiments

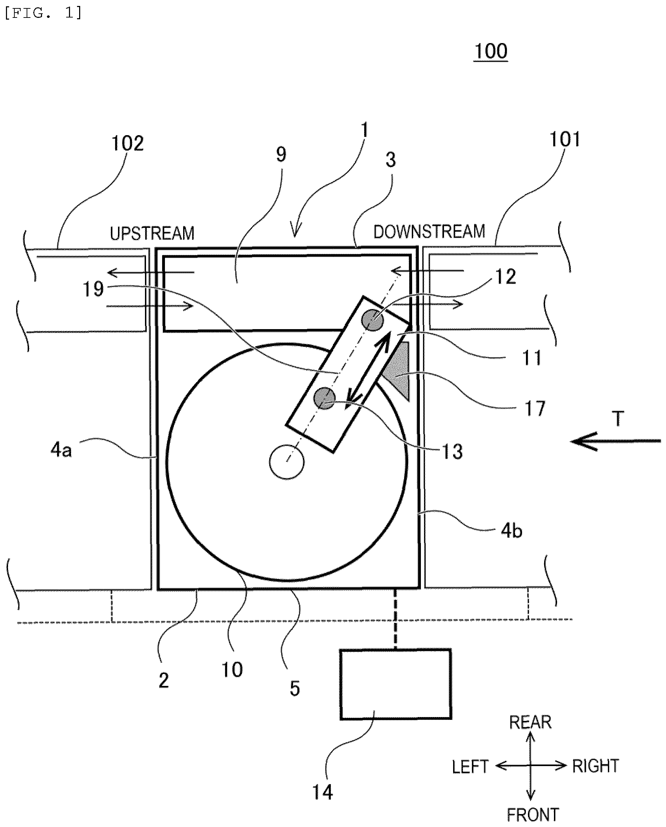

An embodiment of a gripping mechanism, a storage device, and a gripping method according to the invention will be described with reference to FIGS. 1 to 6D. In the drawings used in the present description, the same or corresponding components are denoted by the same or similar reference signs, and repeated description of these components may be omitted.

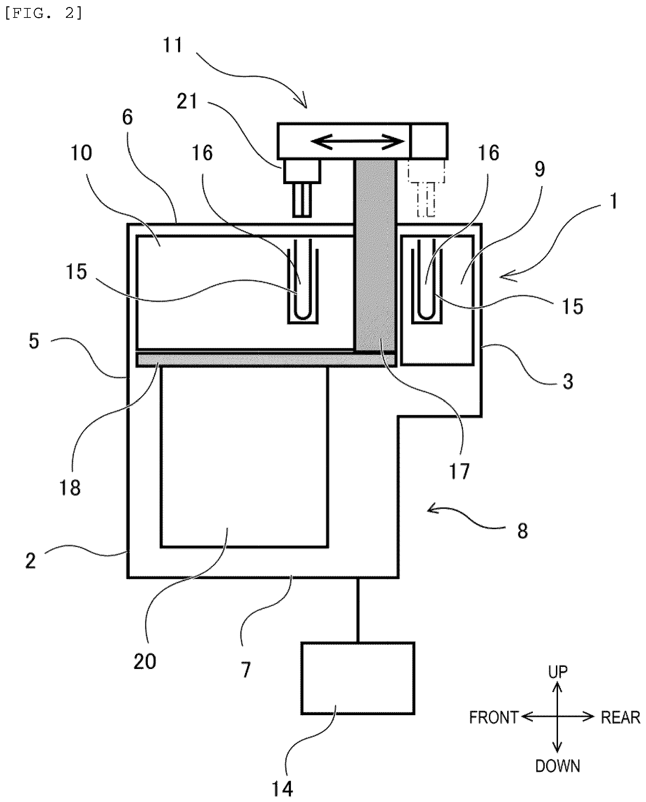

First, an overall configuration of a container storage device 1 that includes a gripping mechanism and stores a container as an object will be described with reference to FIGS. 1 and 2. FIG. 1 is a schematic plan view of a container storage device including a gripping mechanism, and FIG. 2 is a schematic side view of the container storage device, as viewed in a direction of arrow T in FIG. 1.

The container storage device 1 according to the present embodiment is a configuration of an automatic analyzer 100 having an analyzer 101, a pretreatment device 102, a post-treatment device, or the like as shown in FIG. 1, and includes a housing 2 having a substantially rectangular parallelepiped shape as shown in FIG. 2, and the housing 2 includes a first side surface 3 which is a rear surface, a pair of second side surfaces 4a and 4b provided in a front-rear direction on both left and right sides of the first side surface 3, a third side surface 5 which is a front surface, an upper surface 6, a bottom surface 7, and a rear recessed portion 8 which is a space formed by cutting a lower side of a rear surface of the housing 2.

One or more of the analyzer 101, the pretreatment device 102, the post-treatment device, and the container storage device that constitute the automatic analyzer 100 can be omitted, and can be appropriately changed according to a system configuration.

A conveyance path connected to the outside or the analyzer 101 is connected to the left and right second side surfaces 4a and 4b, and a rack on which a sample container or a used empty container is placed can be carried in and out to and from the outside.

A first conveyance path 9 that conveys the rack in a left-right direction along the first side surface 3 is provided inside the housing 2.

A cylindrical storage cabinet 10 having a central axis in a vertical direction is provided in a space adjacent to the front of the first conveyance path 9 and sandwiched between the pair of left and right second side surfaces 4a and 4b. The inside of the storage cabinet 10 is cooled to a temperature lower than a room temperature by a cooling unit 20.

A second conveyance path 11 can convey and transfer, by the gripping mechanism 21, a sample container 15 containing a QC specimen 16 between a first receiving position 12 provided in the first conveyance path 9, a second receiving position 13 provided in the storage cabinet 10, and a third receiving position 23 provided with a rotation mechanism (omitted for convenience of illustration) for reading a barcode of the sample container 15 from the rack conveyed to the first conveyance path 9 to identify a specimen before being installed at an installation location in the storage cabinet 10. The second conveyance path 11 is supported by a second conveyance path support 17 on a base member 18.

The rotation mechanism includes a barcode reader for reading an identification barcode attached to an outer peripheral side surface of the sample container 15 and a rotation device for rotating the sample container 15 together with the barcode to face the barcode, and is installed at the third receiving position 23. The rotation mechanism always stops at the time of storing the sample container 15 in the storage cabinet 10 and always stops at the time of discharging the sample container 15, and it is possible to confirm whether a specimen to be stored or discharged is a desired specimen.

A plurality of sample containers 15 containing specimens are held in the cylindrical storage cabinet 10, and the sample container 15 located at the second receiving position 13 can be accessed by the second conveyance path 11. The sample container 15 is taken out from the storage cabinet 10 and transferred to the first receiving position 12 provided on the first conveyance path 9 along a container transfer trajectory 19, and the sample container 15 is taken out from the first receiving position 12 and stored or discharged into the storage cabinet 10 along the container transfer trajectory 19.

The control device 14 includes, for example, a control computer, a drive circuit of each drive motor, a control circuit of a barcode reader, a storage device of a read barcode, a signal detection circuit by various sensors, a control circuit of a cooling device, and a display circuit of a monitor, and controls various operations of the container storage device 1.

The control device 14 is connected to the devices in the automatic analyzer 100 described above, and controls the operation of each device and mechanism in the automatic analyzer 100. The control device 14 is a computer including a CPU, a memory, and the like, and performs calculation processing for obtaining a concentration of a predetermined component in a specimen based on a detection result of the analyzer 101.

The control of an operation of each device is executed by the control device 14 based on various programs recorded in the storage device. The storage device stores, in addition to various programs used to measure the specimen, various parameters received via an input device, information of a measurement target specimen (specimen type information and the like), a measurement result, and the like.

Operation control processing executed by the control device 14 may be integrated into one program, may be divided into a plurality of programs, or may be a combination thereof. A part or all of the programs may be implemented by dedicated hardware or may be modularized.

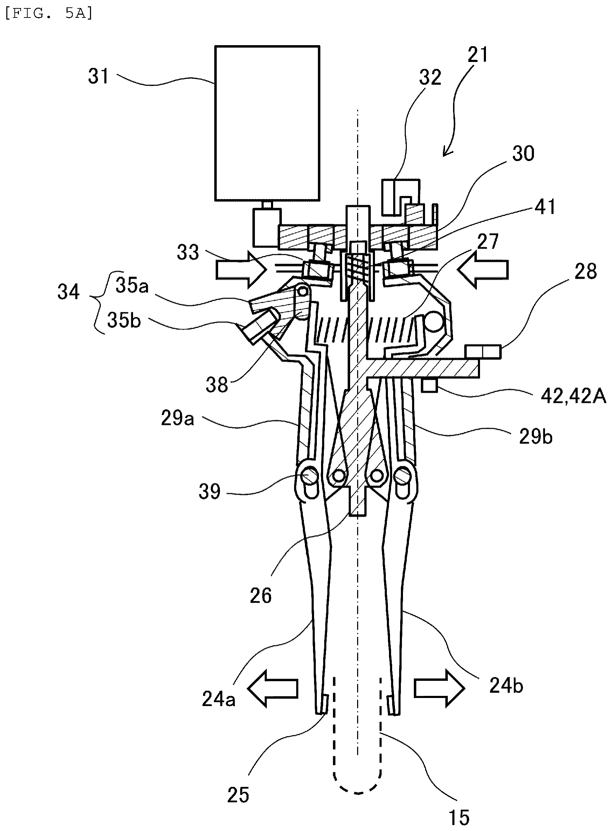

In the present embodiment, the control device 14 determines that the first gripping arm 24a and the second gripping arm 24b are not gripping an object when an output signal of a gripping sensor 34 including an arm relative displacement detection plate 35a and an arm relative displacement detector 35b is a first predetermined value, and determines that the first gripping arm 24a and the second gripping arm 24b are gripping an object when the output signal is a second predetermined value. Preferably, the control device 14 can further determine whether the first gripping arm 24a and the second gripping arm 24b are only in contact with the object based on a distance detected by displacement amount sensors 42 and 42A. Details thereof will be described later with reference to FIGS. 5A to 5C.

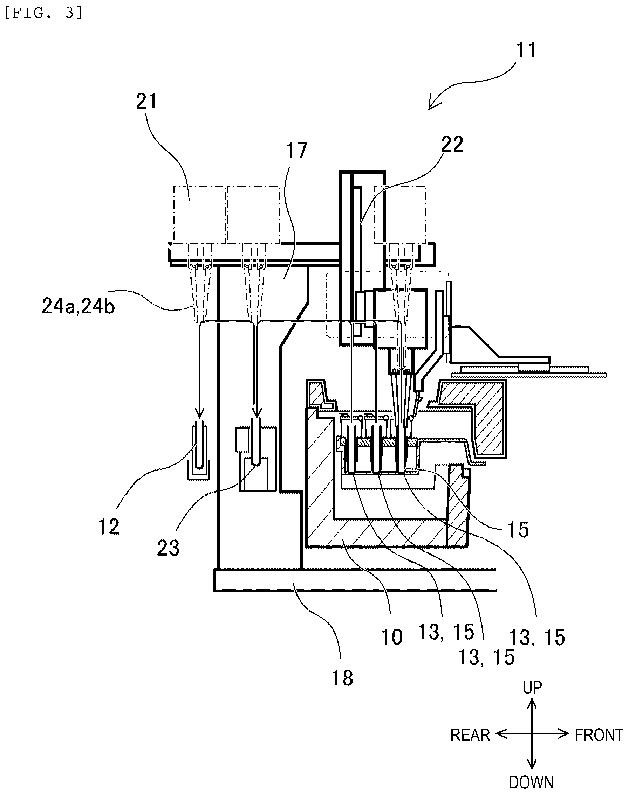

Next, an outline of the gripping mechanism will be described with reference to FIG. 3. FIG. 3 is a schematic view of the gripping mechanism.

The gripping mechanism 21 is supported by a gripping mechanism up-down movement rail 22 to be movable up and down, and can be moved up and down by being driven by a motor (omitted for convenience of illustration).

The gripping mechanism 21 is movable by a distance N between a lower end position at which the sample container 15 is placed at the first receiving position 12, the second receiving position 13, and the third receiving position 23, and an upper end position at which a lower end of the sample container 15 is at least higher than an upper surface of the storage cabinet 10 and at which the sample container 15 does not interfere with other constituent members when the sample container 15 is horizontally moved between the first receiving position 12 and the second receiving position 13.

A lower end portion of the gripping mechanism 21 includes the first gripping arm 24a and the second gripping arm 24b that are radially disposed and can be opened and closed, and is implemented to be movable by being driven by a motor between an open position where an opening amount of the first gripping arm 24a and the second gripping arm 24b is larger than a diameter of the sample container 15 and a gripping position where the sample container 15 is gripped with a predetermined force.

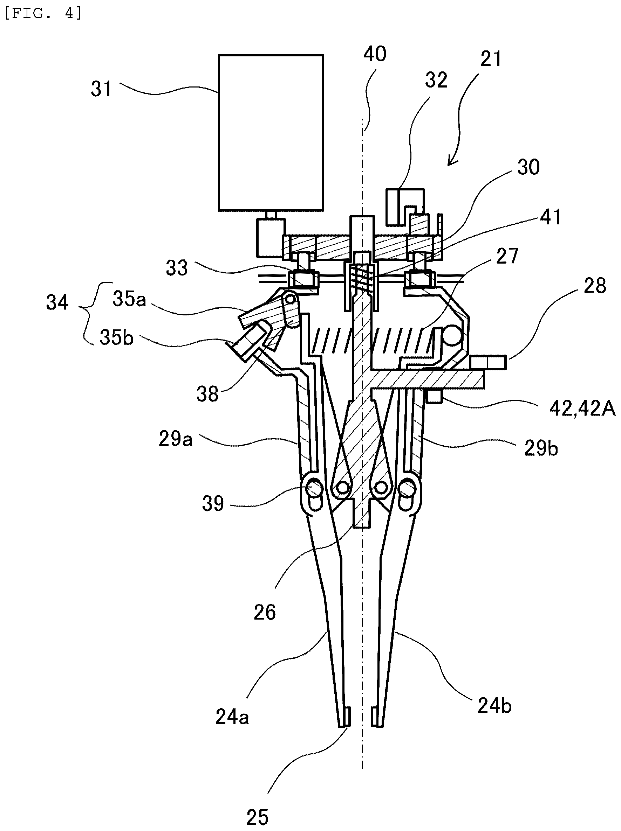

Next, details of the gripping mechanism will be described with reference to FIG. 4. FIG. 4 is a schematic view of the gripping mechanism in the present embodiment.

As shown in FIG. 4 and the like, the gripping mechanism 21 includes the first gripping arm 24a, the second gripping arm 24b, gripping rubbers 25, an up-down slider 26, a gripping spring 27, an abnormal descent sensor 28, control arms 29a and 29b, a spiral cam 30, a drive motor 31, a cam rotation detector 32, an attitude member 33, the gripping sensor 34 including the arm relative displacement detection plate 35a and the arm relative displacement detector 35b, a diameter detector 36, a spiral cam detection plate 37, a member 38, and the like.

The first gripping arm 24a and the second gripping arm 24b grip an object by sandwiching the object between the first gripping arm 24a and the second gripping arm 24b, and are radially disposed at the lower end of the gripping mechanism 21. In other words, the gripping arms are disposed around the vertical axis 40, are pivotally supported to be swingable along a horizontal support axis, and grip an object at the lower end.

In the present embodiment, an example is shown in which two gripping arms of the first gripping arm 24a and the second gripping arm 24b are disposed to face each other, but the number of gripping arms is not limited to two, and may be three, four disposed for each 90°, or five or more as long as the sample container 15 can be gripped and opened.

The gripping rubber 25 is provided on a surface of each of the first gripping arm 24a and the second gripping arm 24b that comes into contact with the sample container 15. Since the gripping rubber 25 comes into contact with the sample container 15, the gripping rubber 25 preferably has a buffer member and chemical resistance, and is not necessarily limited thereto.

Each of the first gripping arm 24a and the second gripping arm 24b is pivotally supported by the up-down slider 26, and an upper end portion thereof is connected to the gripping spring 27 which is a compression spring. Lower end sides of the first gripping arm 24a and the second gripping arm 24b are displaced by the gripping spring 27 in a direction in which tip ends thereof approach each other, and the sample container 15 can be gripped.

The first gripping arm 24a, the second gripping arm 24b, the up-down slider 26, and the gripping spring 27 are integrally implemented to be movable in the up-down direction.

The abnormal descent sensor 28 is implemented to detect that the lower ends of the first gripping arm 24a, the second gripping arm 24b, or the gripped sample container 15 collide with each other due to an abnormal state and ascends in the vertical direction.

Further, the first gripping arm 24a is pivotally supported at a central portion thereof by a coupling portion 39 to be swingable in the horizontal direction with respect to the control arm 29a, and the second gripping arm 24b is pivotally supported at a central portion thereof by the coupling portion 39 to be swingable in the horizontal direction with respect to the control arm 29b.

These control arms 29a and 29b are provided in pairs with the first gripping arm 24a and the second gripping arm 24b, and are arms that control opening and closing operations of the first gripping arm 24a and the second gripping arm 24b. When the first gripping arm 24a and the second gripping arm 24b are not gripping anything, the the first gripping arm 24a and the second gripping arm 24b open and close together, and when the first gripping arm 24a and the second gripping arm 24b are closing to grip an object, the first gripping arm 24a and the second gripping arm 24b do not move in the closing direction, and the control arms 29a and 29b move away from the first gripping arm 24a and the second gripping arm 24b.

Among the control arms 29a and 29b, the control arm 29a on the side paired with the first gripping arm 24a is in contact with an outer peripheral portion on an upper end side of the first gripping arm 24a via the member 38 on an inner peripheral side on the upper end side.

The spiral cam 30, the drive motor 31, and the cam rotation detector 32 are provided at an upper end portion of the gripping mechanism 21.

The spiral cam 30 is coupled to the control arms 29a and 29b via the attitude member 33, and synchronously opens and closes the plurality of control arms 29a and 29b by a rotation operation thereof. Specifically, the spiral cam 30 has a role of converting power by the drive motor 31 into opening and closing operations of the first gripping arm 24a and the second gripping arm 24b via the control arms 29a and 29b.

In the present embodiment, an example is shown in which the rotation operation of the spiral cam 30 is converted into the opening and closing operation of the first gripping arm 24a and the second gripping arm 24b, and the invention is not limited thereto.

The arm relative displacement detection plate 35a and the arm relative displacement detector 35b are pivotally supported to be rotatable with respect to the control arm 29a, and are disposed to be always in contact with the first gripping arm 24a via the member 38.

The arm relative displacement detection plate 35a and the arm relative displacement detector 35b are implemented such that the output signal changes depending on the position of the member 38, that is, a positional relationship between the control arm 29a and the first gripping arm 24a, and the output signal changes when the distance between the first gripping arm 24a and the control arm 29a and the distance between the second gripping arm 24b and the control arm 29b increase to a predetermined amount or more by the first gripping arm 24a and the second gripping arm 24b gripping an object with a predetermined force. More specifically, the arm relative displacement detection plate 35a includes a light emitting portion and a light receiving portion, and the output signal changes depending on whether the arm relative displacement detector 35b is present on its optical axis and the optical axis is blocked (second predetermined value) or not (first predetermined value). Details will be described later.

The displacement amount sensor 42 is a sensor such as a laser distance meter that detects a distance between the control arm 29a and the first gripping arm 24a. The displacement amount sensor 42 does not need to be provided inside the gripping mechanism as long as the distance between the control arm 29a and the first gripping arm 24a can be measured, and may be installed outside the mechanism.

Instead of the displacement amount sensor 42 implemented to detect the distance between the control arm 29a and the first gripping arm 24a, a displacement amount sensor 42A implemented to detect the distance between the first gripping arm 24a and the second gripping arm 24b, a sensor implemented to detect the distance between the control arm 29b and the second gripping arm 24b, or a sensor implemented to detect the distance between the sample container 15 and at least one of the first gripping arm 24a and the second gripping arm 24b may be used.

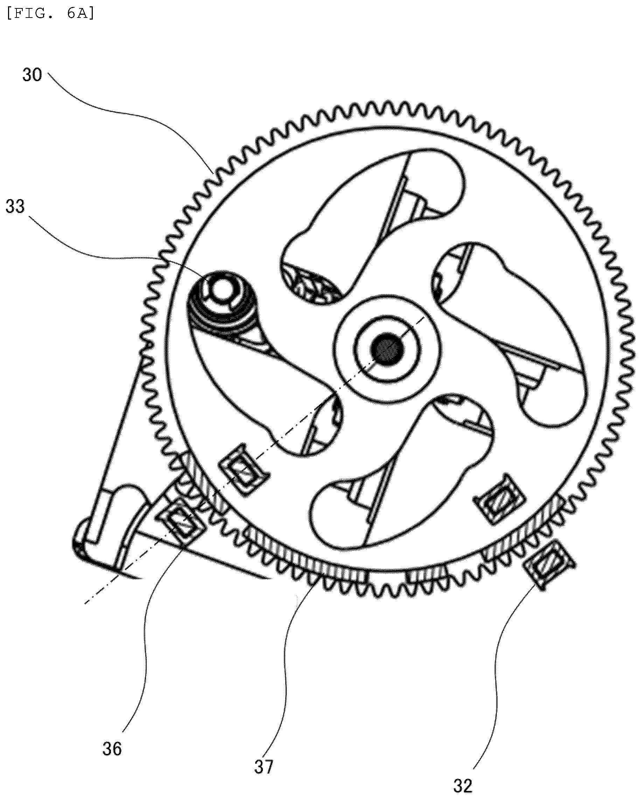

The diameter detector 36 and the spiral cam detection plate 37 are sensors whose output signals change depending on a distance between the first gripping arm 24a and the second gripping arm 24b in a portion gripping an object, and which output different signals in a first opening amount, which is an opening amount of the first gripping arm 24a and the second gripping arm 24b when the object falls within a first diameter range, and in a second opening amount, which is an opening amount of the first gripping arm 24a and the second gripping arm 24b when the object falls within a second diameter range which does not fall within the first diameter range. Specifically, the output signal differs between a rotation angle of the spiral cam 30 corresponding to the first opening amount and a rotation angle of the spiral cam 30 corresponding to the second opening amount. Details thereof will be described later with reference to FIGS. 6A to 6D.

The first diameter range does not need to be one region, and may be a plurality of regions. For example, it is possible to deal with a case in which containers having two types of diameters are determined as O.K. and a container having a diameter in the second diameter range that does not fall within the first diameter range is determined as N.G.

The cam rotation detector 32 is a sensor for position confirmation at the time of positioning and abnormal stop of each operation mechanism, and is provided, for example, to grasp whether the spiral cam 30 is located at a predetermined stop position or located at a home position, that is, whether the first gripping arm 24a, the second gripping arm 24b, and the control arms 29a and 29b are located at predetermined stop positions or located at home positions.

Among the arm relative displacement detection plate 35a, the arm relative displacement detector 35b, the displacement amount sensors 42 and 42A, the diameter detector 36, the spiral cam detection plate 37, and the cam rotation detector 32, at least the arm relative displacement detection plate 35a, the arm relative displacement detector 35b, the diameter detector 36, the spiral cam detection plate 37, and the cam rotation detector 32 are preferably movable up and down in the vertical direction together with the first gripping arm 24a, the second gripping arm 24b, and the control arms 29a and 29b, but at least the arm relative displacement detection plate 35a and the arm relative displacement detector 35b are preferably movable up and down in the vertical direction. The displacement amount sensors 42 and 42A do not need to be movable up and down in the vertical direction together with the first gripping arm 24a, the second gripping arm 24b, and the control arms 29a and 29b, and are freely set.

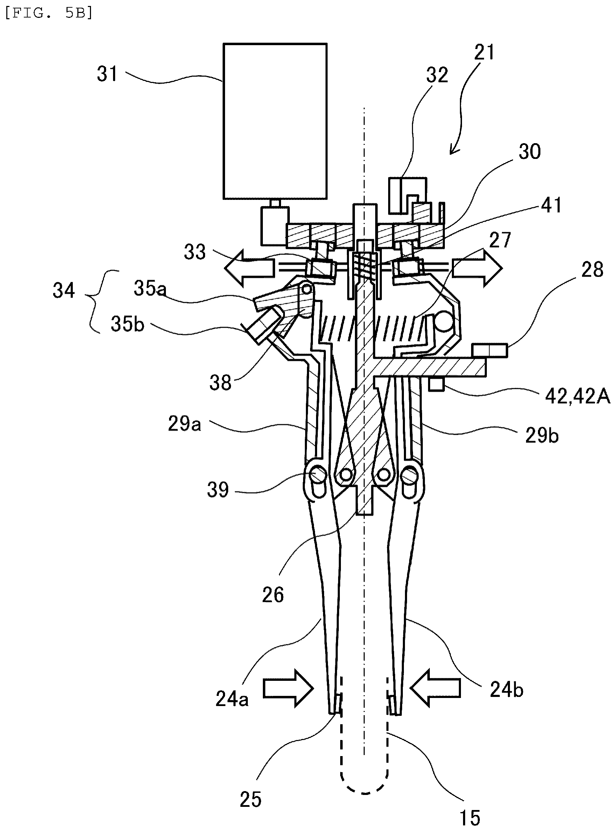

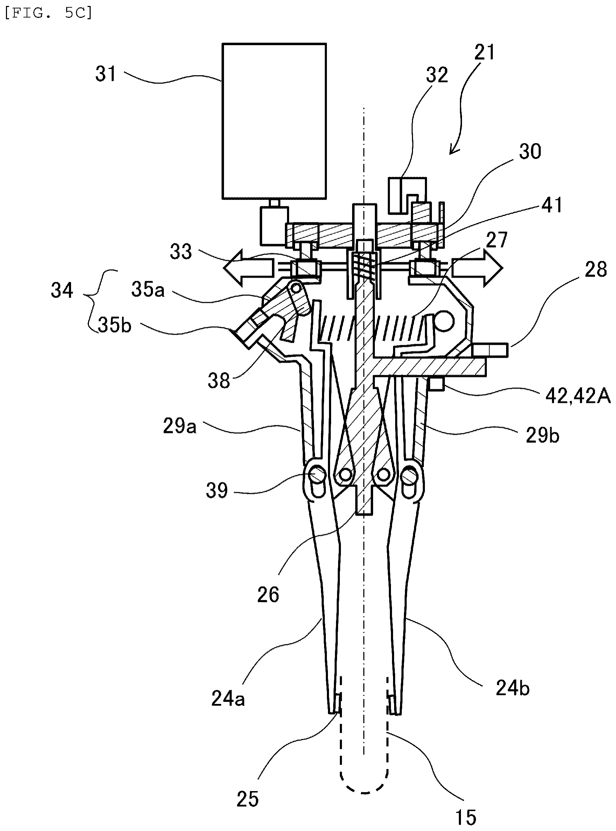

A gripping operation of the gripping mechanism 21 will be described with reference to FIGS. 5A to 5C. FIG. 5A is a schematic view of a state in which the gripping arm of the gripping mechanism is opened, FIG. 5B is a schematic view of a state in which the gripping rubber of the gripping mechanism is in contact with a sample container, and FIG. 5C is a schematic view of a state in which the arm relative displacement detector of the gripping mechanism detects the arm relative displacement detection plate.

FIG. 5A shows a state in which the first gripping arm 24a and the second gripping arm 24b are opened. By operating the drive motor 31, the spiral cam 30 is rotated to move the attitude member 33 toward the center of the gripping mechanism 21. Accordingly, the control arms 29a and 29b and the first gripping arm 24a and the second gripping arm 24b operate in a direction of compressing the gripping spring 27 in a state of being in close contact with each other, and the lower end sides of the first gripping arm 24a and the second gripping arm 24b are positioned in an open state.

FIG. 5B shows a state in which the gripping rubber 25 is in contact with the sample container 15. By operating the drive motor 31, the spiral cam 30 is rotated to move the attitude member 33 in a radial direction. Accordingly, the first gripping arm 24a and the second gripping arm 24b operate in a state of being in close contact with the control arms 29a and 29b by the gripping spring 27, and the lower tips of the first gripping arm 24a and the second gripping arm 24b operate in a direction of gripping the sample container 15. At this timing, since the distance between the second gripping arm 24b and the sample container 15 is "0", it can be determined that the lower tips of the first gripping arm 24a and the second gripping arm 24b are in contact with the sample container 15 based on a detection result of the displacement amount sensors 42 and 42A. However, it is not possible to determine whether the gripping force is generated on the sample container 15 based on the detection result of the displacement amount sensors 42 and 42A alone.

FIG. 5C shows a state in which the arm relative displacement detector 35b detects the arm relative displacement detection plate 35a. In a state in which the gripping rubber 25 of the first gripping arm 24a and the gripping rubber 25 of the second gripping arm 24b are in contact with the sample container 15, the drive motor 31 is further operated to rotate the spiral cam 30.

Accordingly, the attitude member 33 moves in a radially outer circumferential direction, and the upper end sides of the control arms 29a and 29b move radially outward. Accordingly, the first gripping arm 24a and the second gripping arm 24b coupled to the lower end sides of the control arms 29a and 29b and the lower end sides of the control arms 29a and 29b via the coupling portion 39 attempt to move radially inward, but since the lower end sides of the first gripping arm 24a and the second gripping arm 24b are in contact with the sample container 15, the first gripping arm 24a and the second gripping arm 24b cannot move radially inward and remain at the positions.

Accordingly, a relative displacement occurs between the control arms 29a and 29b and the first gripping arm 24a and the second gripping arm 24b which are in close contact with each other. Since the arm relative displacement detection plate 35a is always in contact with the first gripping arm 24a and the second gripping arm 24b by the member 38, the arm relative displacement detection plate 35a rotates to an inner peripheral side in the radial direction due to the relative displacement, the arm relative displacement detector 35b is shielded, and it is possible to detect that the gripping force is generated in the sample container 15.

As described above, the arm that grips the sample container 15 is divided into the first gripping arm 24a, the second gripping arm 24b, and the control arms 29a and 29b that control the first gripping arm 24a and the second gripping arm 24b, and the relative displacement is captured, so that the generation of the gripping force can be detected as the displacement. That is, it is possible to ensure a state in which a stable gripping force is generated, and to provide the gripping mechanism 21 with high reliability.

Here, the numbers of the control arms 29a and 29b and the attitude members 33 are not limited.

Next, a diameter identification operation of the sample container 15 which is the gripping target will be described with reference to FIGS. 6A to 6D. FIGS. 6A to 6D are diagrams showing a diameter identification operation of the gripping mechanism.

The diameter detector 36 and the spiral cam detection plate 37 are sensors for detecting whether a gripping target is appropriate, the spiral cam detection plate 37 is a plate having a slit provided on an upper surface side of the spiral cam 30, and the diameter detector 36 is a sensor whose output signal changes depending on the presence or absence of the spiral cam detection plate 37. More specifically, the diameter detector 36 includes a light emitting portion and a light receiving portion, and an output signal changes depending on whether the optical axis is blocked by the presence of the spiral cam detection plate 37 on the optical axis or the optical axis is not blocked by the slit of the spiral cam detection plate 37.

FIG. 6A shows an origin (a state in which the first gripping arm 24a and the second gripping arm 24b are closed). As shown in FIG. 6A, since the upper end side of the attitude member 33 is inserted into a hole provided in the spiral cam 30, the attitude member 33 is held by the spiral cam 30 at a position away from a rotation axis of the spiral cam 30. Accordingly, the upper end sides of the control arms 29a and 29b are held at positions away from the rotation axis of the spiral cam 30, whereas the lower end sides of the first gripping arm 24a and the second gripping arm 24b supported by the control arms 29a and 29b via the coupling portion 39 are held in the closed state.

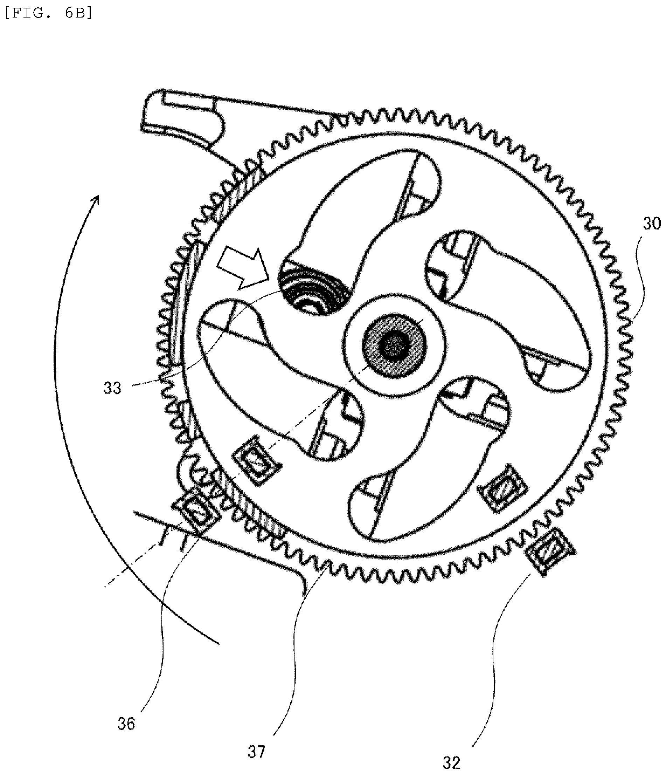

FIG. 6B shows a state in which the first gripping arm 24a and the second gripping arm 24b are fully opened. As shown in FIG. 6B, when the spiral cam 30 rotates, the attitude member 33 moves toward the center of the rotation axis of the spiral cam 30, and the upper end sides of the control arms 29a and 29b move toward the center of the rotation axis of the spiral cam 30, whereas the lower end sides of the first gripping arm 24a and the second gripping arm 24b supported by the control arms 29a and 29b via the coupling portion 39 are opened.

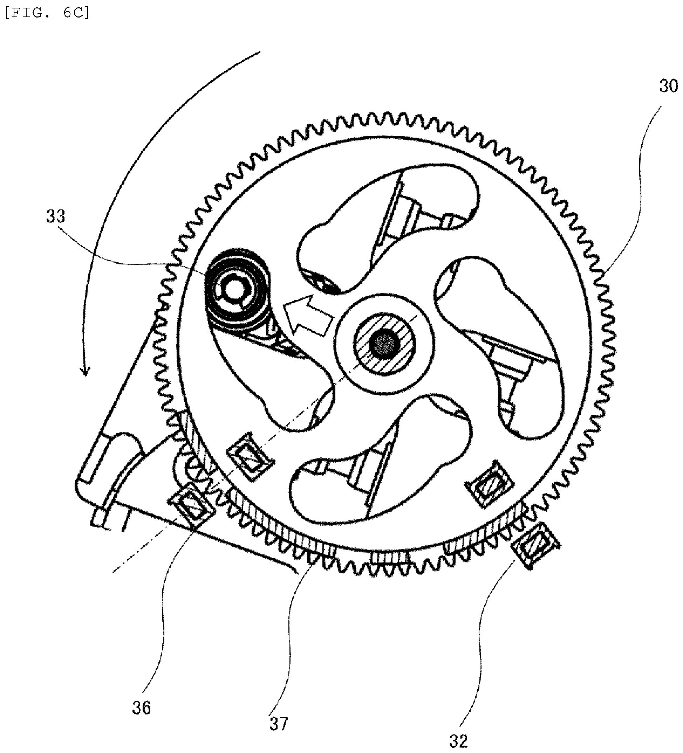

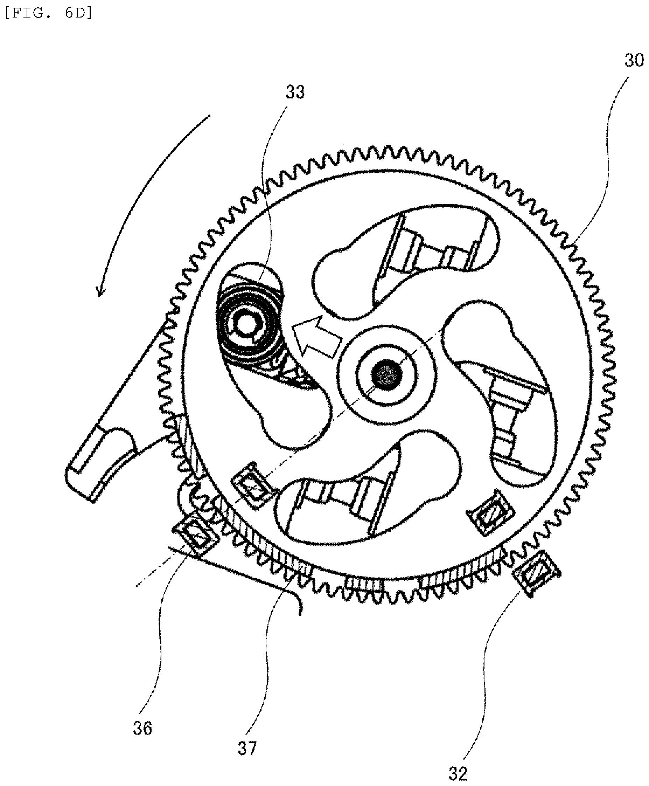

FIGS. 6C and 6D show a state in which the sample container 15 is gripped by the first gripping arm 24a and the second gripping arm 24b. That is, the arm relative displacement detection plate 35a is detected by the arm relative displacement detector 35b.

FIG. 6C shows a state in which the sample container 15 having a predetermined specification (a size that can be stored in the container storage device 1) is gripped.

In the structure of the gripping mechanism in the present embodiment, the positions of the upper end sides of the control arms 29a and 29b, that is, the positions of the slits of the spiral cam detection plate 37 in the circumferential direction are determined according to the positions of the lower end sides of the first gripping arm 24a and the second gripping arm 24b, but when the sample container 15 within the specification is held as shown in FIG. 6C, a slit portion of the spiral cam detection plate 37 having the slit is positioned on the optical axis of the diameter detector 36 and is positioned in a light transmitting state.

On the other hand, FIG. 6D shows a state in which the sample container 15 outside the predetermined specification is gripped. As shown in FIG. 6D, when the sample container 15 outside the specification is held, the spiral cam detection plate 37 having the slit is located on the optical axis of the diameter detector 36 and is located in a light shielding state.

As shown in FIGS. 6C and 6D, by detecting the rotation angle of the spiral cam 30 when detecting the relative displacement of the arms according to the positions of the lower end sides of the first gripping arm 24a and the second gripping arm 24b, it is possible to output different signals depending on the diameter of the gripped sample container 15.

Accordingly, it is possible to determine whether the sample container 15 can be stored in the device and to select a storage location based on the diameter of the sample container 15.

Hereinafter, the situation of each sensor in these operations will be collectively described. First, a flow of the storing operation of the sample container 15 which is the gripping target in the storage cabinet 10 will be described.

First, the first gripping arm 24a and the second gripping arm 24b are opened on the first conveyance path 9. Next, lowering is started from an upper limit point on the first conveyance path 9. At this time, when a sensor status of the abnormal descent sensor 28 is detected, it is determined that the sensor comes into contact with the object, and the operation is stopped.

Thereafter, the first gripping arm 24a and the second gripping arm 24b are closed, and the sample container 15 is gripped. At this time, when a sensor status of the gripping sensor 34 cannot be detected, it is determined that the sample container 15 fails to be gripped, and the operation is stopped. In addition, when the sensor status of the gripping sensor 34 is the detection O.K. but the status of the diameter detector 36 is N.G. and the sensor status is not appropriate, it is determined that the sample container 15 outside the specification is conveyed on the first conveyance path 9, and the operation is stopped.

It is possible to make a determination based on the number of pulses without installing the diameter detector 36, and it is possible to adopt a form in which, during gripping, the number of operation pulses is counted, and when the number of operation pulses is equal to or smaller than a first reference value, it is determined that the tube is out of specification (small diameter) and the operation is stopped, and when the number of operation pulses is equal to or greater than a second reference value, it is determined that the tube is out of specification (large diameter) and the operation is stopped.

Thereafter, the sample container 15 ascends to the upper limit point while being gripped, and is moved on the container transfer trajectory 19 from the first receiving position 12 on the first conveyance path 9 to the third receiving position 23 on the rotation mechanism. At this time, when the detection of the gripping sensor 34 is lost, it is determined that the specimen has fallen, and the operation can be stopped.

Next, the sample container 15 descends from the upper limit point and placed on the rotation mechanism. At this time, the sample container 15 descends until the bottom surface of the sample container 15 is just above the rotation mechanism. At this time, when the sensor status of the abnormal descent sensor 28 is detected, it is determined that the abnormal descent sensor 28 comes into contact with the object, and an installation operation on the rotation mechanism is stopped. Thereafter, descending for pushing is further performed until the sensor status of the abnormal descent sensor 28 is detected, and the sample container 15 is actually pressed against the rotation mechanism. When the sensor status of the abnormal descent sensor 28 is not detected during the further descent, it is determined that the installation is failed (there are a plurality of factors), and the installation operation on the rotation mechanism is stopped.

Thereafter, a "tightening" operation is performed to align the spiral cam detection plate 37 so that it is positioned on the optical axis of the diameter detector 36 to achieve the state shown in FIG. 6A. Further, since the previous descent for pushing is performed using a spring 41, a "cushion release" is performed to loosen a force to prevent the spiral cam detection plate 37 from jumping out when suddenly released is executed, and then the first gripping arm 24a and the second gripping arm 24b are opened to release the sample container 15. After the release, the sample container 15 ascends to the upper limit point. Before and after this, barcode reading is executed by the rotation mechanism.

After the barcode reading is executed, the first gripping arm 24a and the second gripping arm 24b descends from the upper limit point. At this time, when the sensor status of the abnormal descent sensor 28 is detected, it is determined that the sensor comes into contact with the object, and the operation is stopped.

Thereafter, the first gripping arm 24a and the second gripping arm 24b are closed, and the sample container 15 is gripped. At this time, when the sensor status of the gripping sensor 34 cannot be detected, it is determined that the sample container 15 has failed to be gripped, and the operation is stopped. Here, since the detection of the diameter is OK at the stage of the first conveyance path 9, the detection of the diameter is skipped here.

In addition, when the sensor status of the diameter detector 36 is determined to be NG at the stage, it is possible to determine that the tube is out of specification and the operation is stopped, and when the number of operation pulses is counted and is equal to or smaller than the first reference value during gripping, it is possible to determine that the tube is out of specification (small diameter) and the operation is stopped, and when the number of operation pulses is equal to or greater than the second reference value, it is possible to determine that the tube is out of specification (large diameter) and the operation is stopped.

Thereafter, the sample container 15 ascends to the upper limit point while being gripped, and is moved on the container transfer trajectory 19 from the third receiving position 23 on the rotation mechanism to the second receiving position 13 on the storage cabinet 10. At this time, when the detection of the gripping sensor 34 is lost, it is determined that the specimen has fallen, and the operation can be stopped.

Thereafter, in the same manner as when the previous sample container 15 is installed on the rotation mechanism, the sample container 15 descends from the upper limit point and installed in the storage cabinet 10. At this time, the sample container 15 descends until the bottom surface of the sample container 15 is just above the storage cabinet 10. At this time, when the sensor status of the abnormal descent sensor 28 is detected, it is determined that the abnormal descent sensor 28 comes into contact with the object, and the storing operation into the storage cabinet 10 is stopped. Thereafter, descending for pushing is further performed until the sensor status of the abnormal descent sensor 28 is detected, and the sample container 15 is actually pressed against the storage cabinet 10. When the sensor status of the abnormal descent sensor 28 is not detected during the further descent, it is determined that the installation is failed (there are a plurality of factors), and the storing operation into the storage cabinet 10 is stopped.

Similarly, when the "tightening" and the "cushion release" are executed, the first gripping arm 24a and the second gripping arm 24b are opened to open the sample container 15. After the release, the sample container 15 ascends to the upper limit point.

Thereafter, the first gripping arm 24a and the second gripping arm 24b are moved on the container transfer trajectory 19 from the second receiving position 13 on the storage cabinet 10 to the first receiving position 12 on the first conveyance path 9, the first gripping arm 24a and the second gripping arm 24b are closed to return to the home position, thereby completing the storing operation.

Next, a flow of a discharging operation will be described.

First, the first gripping arm 24a and the second gripping arm 24b are opened on the first receiving position 12 on the first conveyance path 9, and are moved on the container transfer trajectory 19 from the first receiving position 12 on the first conveyance path 9 to the second receiving position 13 on the storage cabinet 10.

Next, the descent is started from the upper limit point of the second receiving position 13. At this time, when a sensor status of the abnormal descent sensor 28 is detected, it is determined that the sensor comes into contact with the object, and the operation is stopped.

Thereafter, the first gripping arm 24a and the second gripping arm 24b are closed, and the sample container 15 is gripped. At this time, when a sensor status of the gripping sensor 34 cannot be detected, it is determined that the sample container 15 fails to be gripped, and the operation is stopped. Here, since the detection of the diameter is OK at the stage of being stored in the storage cabinet 10, the detection of the diameter is skipped here.

In addition, when the sensor status of the diameter detector 36 is determined to be NG at the stage, it is possible to determine that the tube is out of specification and the operation is stopped, and when the number of operation pulses is counted and is equal to or smaller than the first reference value during gripping, it is possible to determine that the tube is out of specification (small diameter) and the operation is stopped, and when the number of operation pulses is equal to or greater than the second reference value, it is possible to determine that the tube is out of specification (large diameter) and the operation is stopped.

Thereafter, the sample container 15 ascends to the upper limit point while being gripped, and is moved on the container transfer trajectory 19 from the second receiving position 13 on the storage cabinet 10 to the third receiving position 23 on the rotation mechanism. At this time, when the detection of the gripping sensor 34 is lost, it is determined that the specimen has fallen, and the operation can be stopped.

Thereafter, in the same manner as when the sample container 15 is installed on the rotation mechanism for storage, the sample container 15 descends from the upper limit point and installed in the rotation mechanism. At this time, the sample container 15 descends until the bottom surface of the sample container 15 is just above the rotation mechanism. At this time, when the sensor status of the abnormal descent sensor 28 is detected, it is determined that the abnormal descent sensor 28 comes into contact with the object, and an installation operation on the rotation mechanism is stopped. Thereafter, descending for pushing is further performed until the sensor status of the abnormal descent sensor 28 is detected, and the sample container 15 is actually pressed against the rotation mechanism. When the sensor status of the abnormal descent sensor 28 is not detected during the further descent, it is determined that the installation is failed (there are a plurality of factors), and the installation operation on the rotation mechanism is stopped.

Similarly, when the "tightening" and the "cushion release" are executed, the first gripping arm 24a and the second gripping arm 24b are opened to open the sample container 15. After the release, the sample container 15 ascends to the upper limit point. Before and after this, barcode reading is executed by the rotation mechanism.

After the barcode reading is executed, the first gripping arm 24a and the second gripping arm 24b descends from the upper limit point. At this time, when the sensor status of the abnormal descent sensor 28 is detected, it is determined that the sensor comes into contact with the object, and the operation is stopped.

Thereafter, the first gripping arm 24a and the second gripping arm 24b are closed, and the sample container 15 is gripped. At this time, when a sensor status of the gripping sensor 34 cannot be detected, it is determined that the sample container 15 fails to be gripped, and the operation is stopped. Here again, since the detection of the diameter is OK at the stage of being stored in the storage cabinet 10, the detection of the diameter is skipped here.

In addition, when the sensor status of the diameter detector 36 is determined to be NG at the stage, it is possible to determine that the tube is out of specification and the operation is stopped, and when the number of operation pulses is counted and is equal to or smaller than the first reference value during gripping, it is possible to determine that the tube is out of specification (small diameter) and the operation is stopped, and when the number of operation pulses is equal to or greater than the second reference value, it is possible to determine that the tube is out of specification (large diameter) and the operation is stopped.

Thereafter, the sample container 15 ascends to the upper limit point while being gripped, and is moved on the container transfer trajectory 19 from the third receiving position 23 on the rotation mechanism to the first receiving position 12 on the first conveyance path 9. At this time, when the detection of the gripping sensor 34 is lost, it is determined that the specimen has fallen, and the operation can be stopped.

Thereafter, the sample container 15 similarly descends from the upper limit point, and the previous sample container 15 is set in a specimen rack on the first conveyance path 9. At this time, the sample container 15 descends until the bottom surface of the sample container 15 is just above the specimen rack. At this time, when the sensor status of the abnormal descent sensor 28 is detected, it is determined that the abnormal descent sensor 28 comes into contact with the object, and the installation operation on the specimen rack is stopped. Thereafter, descending for pushing is further performed until the sensor status of the abnormal descent sensor 28 is detected, and the sample container 15 is actually pressed against the specimen rack. When the sensor status of the abnormal descent sensor 28 is not detected during the further descent, it is determined that the installation is failed (there are a plurality of factors), and the installation operation on the specimen rack is stopped.

Similarly, when the "tightening" and the "cushion release" are executed, the first gripping arm 24a and the second gripping arm 24b are opened to open the sample container 15. After the release, the sample container 15 ascends to the upper limit point. Thereafter, the first gripping arm 24a and the second gripping arm 24b are closed to return to the home position, thereby completing the discharging operation.

In this way, by providing a plurality of sensors different from the arm relative displacement detection plate 35a, the arm relative displacement detector 35b, the diameter detector 36, the spiral cam detection plate 37, and the cam rotation detector 32, reliability can be ensured.

In the present embodiment, an example of a detection method based on the rotation angle of the spiral cam 30 is shown, and the detection method is not limited to the rotation angle of the spiral cam. If the opening amount of the gripping arm can be detected, the same effect can be obtained.

Next, effects of the embodiment will be described.

A gripping mechanism according to the present embodiment described above includes the first gripping arm 24a and the second gripping arm 24b that are disposed around a vertical axis, the gripping arms being pivotally supported to be swingable along a horizontal support shaft, and the gripping arms being configured to grip an object at lower ends; the gripping spring 27 configured to apply a gripping force to the lower ends of the first gripping arm 24a and the second gripping arm 24b; the plurality of control arms 29a and 29b that are provided in pairs with the first gripping arm 24a and the second gripping arm 24b, the control arms being configured to control an opening and closing operation of the first gripping arm 24a and the second gripping arm 24b; and the arm relative displacement detection plate 35a and the arm relative displacement detector 35b whose output signals change when a distance between the first gripping arm 24a and the second gripping arm 24b and the control arms 29a and 29b is increased to a predetermined amount or more by the first gripping arm 24a and the second gripping arm 24b gripping an object with a predetermined force.

Accordingly, since it is possible to detect whether a stable gripping force is generated only by the arm relative displacement detection plate 35a and the arm relative displacement detector 35b, it is possible to obtain an effect that it is possible to achieve miniaturization compared to the configuration in the related art and to improve reliability of the gripping mechanism compared to the related art.

In addition, the control arms 29a and 29b are opened and closed together with the first gripping arm 24a and the second gripping arm 24b when the first gripping arm 24a and the second gripping arm 24b do not grip anything, and the control arms 29a and 29b are separated from the first gripping arm 24a and the second gripping arm 24b without the first gripping arm 24a and the second gripping arm 24b moving in a closing direction when the first gripping arm 24a and the second gripping arm 24b grip an object when the first gripping arm 24a and the second gripping arm 24b are closed, so that it is possible to achieve whether a stable gripping force is generated with a simple configuration and to reliably perform detection.

Further, since the diameter detector 36 and the spiral cam detection plate 37 that output different signals for the first opening amount, which is the opening amount of the first gripping arm 24a and the second gripping arm 24b when the object falls within the first diameter range, and the second opening amount, which is the opening amount of the first gripping arm 24a and the second gripping arm 24b when the object falls within the second diameter range that does not fall within the first diameter range, are further provided, it is possible to detect whether the gripping target that cannot be placed is gripped at a transfer destination of the gripping target such as the inside of the container storage device 1, and it is possible to provide a gripping mechanism with further improved reliability.

The spiral cam 30 for synchronously opening and closing the plurality of control arms 29a and 29b is further provided, and the output signals of the diameter detector 36 and the spiral cam detection plate 37 are different between the rotation angle of the spiral cam 30 corresponding to the first opening amount and the rotation angle of the spiral cam 30 corresponding to the second opening amount, thereby enabling a simple configuration to detect whether the object is an appropriate gripping target.

Further, the displacement amount sensor 42 that detects the distance between the control arm 29a and the first gripping arm 24a and the displacement amount sensor 42A that detects the distance between at least one of the first gripping arm 24a and the second gripping arm 24b and the sample container 15 are further provided, and the control device 14 can also determine the presence or absence of contact with the sample container 15 by further determining whether the first gripping arm 24a and the second gripping arm 24b are only in contact with an object based on the distance detected by the displacement amount sensor 42.

The arm relative displacement detection plate 35a and the arm relative displacement detector 35b move up and down in the vertical direction together with the first gripping arm 24a and the second gripping arm 24b, and thus can be implemented to correspond to more various gripping mechanisms.

### <Others>

The invention is not limited to the embodiment described above, and various modifications and applications are possible. The embodiment described above is described in detail for easy understanding of the invention, and the invention is not necessarily limited to those having all the configurations described above.

### Reference Signs List

- 1:: container storage device
- 2:: housing
- 3:: first side surface
- 4a, 4b:: second side surface
- 5:: third side surface
- 6:: upper surface
- 7:: bottom surface
- 8:: rear recessed portion
- 9:: first conveyance path
- 10:: storage cabinet
- 11:: second conveyance path
- 12:: first receiving position
- 13:: second receiving position
- 14:: control device (determination unit)
- 15:: sample container
- 16:: QC specimen
- 17:: second conveyance path support
- 18:: base member
- 19:: container transfer trajectory
- 20:: cooling unit
- 21:: gripping mechanism
- 22:: gripping mechanism up-down movement rail
- 23:: third receiving position
- 24a:: first gripping arm
- 24b:: second gripping arm
- 25:: gripping rubber
- 26:: up-down slider
- 27:: gripping spring (biasing member)
- 28:: abnormal descent sensor
- 29a, 29b:: control arm
- 30:: spiral cam (rotation spiral cam)
- 31:: drive motor
- 32:: cam rotation detector
- 33:: attitude member
- 34:: gripping sensor (state sensor)
- 35a:: arm relative displacement detection plate (state sensor)
- 35b:: arm relative displacement detector (state sensor)
- 36:: diameter detector (object diameter detection sensor)
- 37:: spiral cam detection plate (object diameter detection sensor)
- 38:: member (first site)
- 39:: coupling portion
- 40:: vertical axis
- 41:: spring
- 42, 42A:: displacement amount sensor
- 100:: automatic analyzer
- 101:: analyzer
- 102:: pretreatment device

## Claims

1. A gripping mechanism comprising:
a plurality of gripping arms disposed around a vertical axis, the gripping arms being pivotally supported to be swingable along a horizontal support shaft, the gripping arms being configured to grip an object at lower ends;
a biasing member configured to apply a gripping force to the lower ends of the plurality of gripping arms;
a plurality of control arms provided in pairs with the plurality of gripping arms, the control arms being configured to control an opening and closing operation of the gripping arms; and
a state sensor whose output signal changes when a distance between the gripping arms and the control arms is increased to a predetermined amount or more by gripping the object with a predetermined force by the gripping arms.

2. The gripping mechanism according to claim 1, wherein
the control arms
when the gripping arms grip nothing, open and close together with the gripping arms, and
when the gripping arms are closed to grip the object, separate from the gripping arms without moving the gripping arms in a closing direction.

3. The gripping mechanism according to claim 1, further comprising:
an object diameter detection sensor configured to output different signals respectively in a first opening amount, which is an opening amount of the gripping arms when the object fits within a first diameter range, and a second opening amount, which is an opening amount of the gripping arms when the object is in a second diameter range that does not fit within the first diameter range.

4. The gripping mechanism according to claim 3, further comprising:
a rotation spiral cam configured to synchronously open and close the plurality of control arms, wherein
the object diameter detection sensor has different output signals at a rotation angle of the rotation spiral cam corresponding to the first opening amount and a rotation angle of the rotation spiral cam corresponding to the second opening amount.

5. The gripping mechanism according to claim 1, wherein
the plurality of gripping arms include a first gripping arm and a second gripping arm that grips the object by sandwiching the object between the first gripping arm and the second gripping arm,
the control arm is in contact with the first gripping arm via a first site,
an output signal of the state sensor changes depending on a position of the first site, and
the gripping mechanism further comprises a determination unit configured to determine that the first gripping arm and the second gripping arm are not gripping the object when the output signal of the state sensor is a first predetermined value, and determine that the first gripping arm and the second gripping arm are gripping the object when the output signal is a second predetermined value.

6. The gripping mechanism according to claim 5, further comprising:
a displacement amount sensor configured to detect a distance between the control arm and the first gripping arm, wherein
the determination unit further determines, based on the distance detected by the displacement amount sensor, whether the first gripping arm and the second gripping arm are merely touching the object.

7. The gripping mechanism according to claim 5, further comprising:
a displacement amount sensor configured to detect a distance between the object and one or more of the first gripping arm and the second gripping arm, wherein
the determination unit further determines, based on the distance detected by the displacement amount sensor, whether the first gripping arm and the second gripping arm are merely touching the object.

8. The gripping mechanism according to claim 1, wherein
the state sensor moves up and down together with the plurality of gripping arms in a vertical direction.

9. A container storage device comprising:
the gripping mechanism according to claim 1, wherein
a container is stored as the object.

10. A gripping method comprising:
when a gripping mechanism including
a plurality of gripping arms disposed around a vertical axis and pivotally supported to be swingable along a horizontal support shaft and configured to grip the object at lower ends,
a biasing member configured to apply a gripping force to the lower ends of the plurality of gripping arms, and
a plurality of control arms provided in pairs with the plurality of gripping arms and configured to control an opening and closing operation of the gripping arms, grips an object,
changing an output signal when a distance between the gripping arms and the control arms is increased to a predetermined amount or more by gripping the object with a predetermined force by the gripping arms.
